Europäisches Patentamt

European Patent Office

Office européen des brevets

(19)

(11) Veröffentlichungsnummer: **0 131 064**
**B1**

(12) **EUROPÄISCHE PATENTSCHRIFT**

(45) Veröffentlichungstag der Patentschrift:
02.04.86

(51) Int. Cl.⁴: **B 28 B 19/00**

(21) Anmeldenummer: **83106829.1**

(22) Anmeldetag: **12.07.83**

(54) **Verfahren und Vorrichtung zum kontinuierlichen Auftragen einer Bewehrungsschicht auf eine poröse, mineralische Bauplatte.**

(43) Veröffentlichungstag der Anmeldung:
**16.01.85 Patentblatt 85/3**

(45) Bekanntmachung des Hinweises auf die Patenterteilung:
**02.04.86 Patentblatt 86/14**

(84) Benannte Vertragsstaaten:
**BE FR GB IT NL SE**

(56) Entgegenhaltungen:
**DE - A - 2 854 228**
**DE - A - 2 930 097**
**DE - B - 1 166 667**
**DE - C - 815 923**
**FR - A - 1 557 392**

(73) Patentinhaber: **YTONG AG, Hornstrasse 3,
D-8000 München 40 (DE)**

(72) Erfinder: **Specht, Manfred, Ahornstrasse 14,
D-8038 Gröbenzell (DE)**

(74) Vertreter: **Patentanwälte Dr. Solf & Zapf, Asamstrasse 8,
D-8000 München 90 (DE)**

ACTORUM AG

## Beschreibung

Die Erfindung betrifft ein Verfahren zum kontinuierlichen Auftragen einer Bewehrungsschicht auf eine poröse, mineralische Bauplatte, insbesondere auf eine Gasbetonplatte od.dgl. mineralische poröse Bauplatte, wobei die Beschichtungsmasse durch eine rotierende Auftragswalze auf die unter der Walze entlang transportierte Bauplatte aufgetragen und mit einer Glättwalze eine Nachbehandlung der Beschichtung durchgeführt wird.

Des weiteren betrifft die Erfindung eine Vorrichtung zur Durchführung des Verfahrens, wobei die Auftragswalze und die Glättwalze separat stufenlos antreibbar und höhenverstellbar angeordnet sind und der Glättwalze ein Abstreifer zugeordnet ist.

Bei einem bekannten Verfahren gemäss dem Oberbegriff des Anspruchs 1 und einer bekannten Vorrichtung gemäss dem Oberbegriff des Anspruchs 9 (DE-B Nr. 1166667) wird eine Spachtelmasse in Vorschubrichtung der Bauplatte (Trägerwerkstoff) aufgetragen. Hierzu ist vor der Auftragswalze eine gesonderte Dosierwalze angeordnet. Ein von der Auftragswalze und der Dosierwalze gebildeter Zwickel dient zur Aufnahme der Spachtelmasse. Die Auftragswalze wird in Vorschubrichtung des Trägerwerkstoffs angetrieben, während die Glättwalze entgegengesetzt zur Vorschubrichtug angetrieben wird. Die Auftragswalze und die Glättwalze rotieren also mit unterschiedlichem Drehsinn.

Eine glatte und gleichmässige Oberfläche und ein inniger Verbund mit dem Trägerwerkstoff lässt sich jedoch nur mit bestimmten Spachtelmassen und Trägerwerkstoffen erreichen (Kunststoffbeschichtung auf Holzspanplatte) und wenn sehr dünne Schichten aufgetragen werden sollen. Es hat sich gezeigt, dass mit dem bekannten Verfahren und der bekannten Vorrichtung ein Auftragen mineralischer Mörtel nicht möglich ist. Insofern konnte dieser Stand der Technik nicht angewendet werden, z.B. eine Gasbetonplatte zu beschichten, um daraus ein bewehrtes Gasbeton-Bauteil gemäss DE-A Nr. 2854228 herzustellen. Das bekannte Gasbetonbauteil ist oberflächlich mit mindestens einer Glasfasermatte, vorzugsweise einem Glasfasergewebe, bewehrt, wobei die Glasfasermatte an der Oberfläche der Gasbetonplatte angeordnet ist, die Oberfläche kontaktiert, in eine Festmörtelschicht eingebettet ist und mit der Gasbetonplatte über die erhärtete Mörtelschicht in Verbindung steht. Diese Verbindung wird gewährleistet, indem der Mörtel die in der Matte befindlichen Löcher durchdringt, an der Oberfläche der Gasbetonplatte klebt und insbesondere in den oberflächlich angeordneten Poren der Gasbetonplatte sitzt, wodurch sich eine «stiftartige» Verankerung des Mörtels und der Bewehrungsmatte ergibt.

Für die Herstellung derartiger Bauplatten gibt es bisher kein maschinell und kontinuierlich arbeitendes Verfahren zum Aufbringen der Beschichtung. Die Vorrichtungen, die seit langem bekannt sind, sind, wie bereits erwähnt, nicht geeignet, weil ein mineralischer Mörtel damit nicht verarbeitbar ist. Insbesondere aber schafft die Positionierung von Bewehrungselementen während des Auftrags des Mörtels schwer lösbare Probleme.

Aufgabe der Erfindung ist, ein Verfahren und eine Vorrichtung aufzuzeigen, mit denen mineralische Mörtel, insbesondere mit Bewehrungselementen, auf eine poröse, mineralische Bauplatte aufgetragen werden können.

Diese Aufgabe wird erfindungsgemäss durch die Merkmale der unabhängigen Ansprüche 1 und 9 gelöst. Vorteilhafte Ausgestaltungen und Weiterbildungen der Erfindung ergeben sich aus den Unteransprüchen.

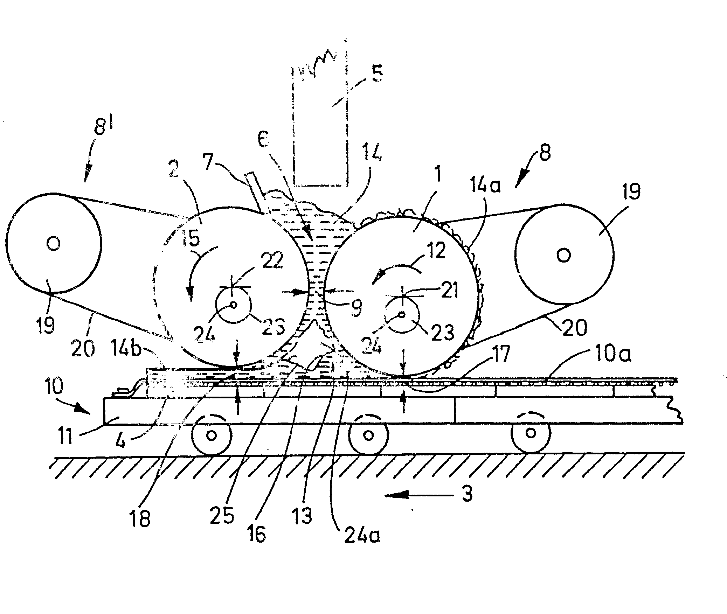

Die erfindungsgemässe Vorrichtung weist, wie an sich bekannt, die Auftragswalze 1 und die parallel dazu angeordnete Glättwalze 2 auf. Beide Walzen bilden zwischen sich einen Spalt 9; sie sind unabhängig voneinander mit geeigneten Mitteln (nicht dargestellt) vorzugsweise stufenlos antreibbar. Unter den Walzen 1 und 2 befindet sich ein Transportmittel 10, z.B. ein Transportband oder Transportwagen 11, das in Pfeilrichtung 3 während des Auftrags bewegt wird und auf dem die zu beschichtenden Platten 4 während des Auftrags vorzugsweise kontinuierlich transportiert werden. Die Platten 4 können dicht an dicht hintereinander und/oder nebeneinander und/oder auf Lücke auf dem Transportmittel angeordnet sein. Die Bewehrungsmatte 10a liegt lose auf der den Walzen 1 und 2 zugekehrten Oberfläche der Bauplatten 4. Sie kann dabei Lücken zwischen den Platten übergreifen und ist nach dem erfindungsgemässen Vefahren mit ihrem Anfangsbereich, wie in der Zeichnung angedeutet, z.B. an der Vorderkante der ersten Bauplatte 4 oder am Transportmittel 10 derart befestigt, dass sie während des Beschichtungsvorganges mit den Beschichtungsmitteln nicht verschoben werden kann. Sie wird kontinuierlich mit dem Vorschub des Transportmittels 10 z.B. von einer Rolle (nicht dargestellt) abgezogen und auf die Oberfläche der Bauplatten 4 gelegt.

Wesentlich ist, dass die Auftragswalze 1 in Pfeilrichtung 12 angetrieben wird, so dass sich zur Bewegungsrichtung der Bauplatten 4 (Pfeilrichtung 3) eine entgegengesetzte Bewegung ergibt im Mörtelauftragsbereich der Walze 1. Die Umkehr des bekannten Prinzips ermöglicht in überraschender Weise den Auftrag eines mineralischen Frischmörtels mit z.B. der folgenden Zusammensetzung und einer Dicke von 1 bis 4, vorzugsweise 2 bis 2,5 mm:

40 bis 70 Gew.-% Sand (Körnung 0 bis 0,5 mm)

25 bis 60 Gew.-% Bindemittel, vorzugsweise Zement

3 bis 10 Gew.-% Kalkhydrat

0,3 bis 0,6 Gew.-% Methylcellulose.

Anstelle von oder in Ergänzung zur Methylcellulose wird vorzugsweise eine 50-zu-50-Latex-Dispersion, insbesondere eine Styrol-Butadien-Latex-Dispersion, verwendet, die auf 1 zu 5 bis 1 zu 10 mit Wasser versetzt wird. Der Mörtel wird vorzugsweise mit einem Wasserfeststofffaktor von

ca. 0,3 aufgetragen. Zweckmässigerweise wird vor dem Auftragen des Mörtels ein an sich bekannter Haftvermittler auf die Plattenoberfläche aufgetragen, der dafür sorgt, dass der erhärtete Mörtel fest auf der Gasbetonoberfläche und in den Poren verankert wird. Der Haftvermittler kann aber auch dem Frischmörtel homogen beigemischt sein. Als Haftvermittler dient vorzugsweise der obengenannte synthetische Latex.

In Kombination mit dem gegensätzlichen Drehsinn der Auftragswalze 1 wird der Frischmörtel im unteren Zwickel 13 zwischen den Walzen 1 und 2 den Platten 4 zugeführt. Zu diesem Zweck wird der Frischmörtel 14 durch eine Mörtelzuführeinrichtung 5 in den oberen Zwickel 6 gefüllt. Infolge des Drehsinns in Richtung des Pfeiles 12 bewirkt die Walze 1, dass der Frischmörtel aus dem oberen Zwickel 6 durch den Spalt 9 in den unteren Zwickel 13 fliesst und auf die Plattenoberfläche gelangt. Die Durchflussmenge richtet sich nach der Breite des Spalts 9, der Drehgeschwindigkeit der Walze 1 und der Drehgeschwindigkeit der Walze 2, die sich, wie an sich bekannt, in Richtung des Pfeils 15, also gleichsinnig mit der Walze 1, dreht. Da diese Parameter erfindungsgemäss variierbar sind, kann die Durchflussmenge genau dosiert werden.

Der Mörtel, der sich im Zwickel 13 befindet, soll ein wulstartiges Reservoir 16 vor der Walze 1 bilden, so dass immer genügend Auftragsmaterial im wulstförmigen Materialstau 16 vorhanden ist. Zu diesem Zweck wird ein Abstand zwischen der Walze 1 und der Oberfläche der Platten 4 eingestellt, der nur wenige Millimeter, vorzugsweise etwa 1 mm, beträgt. Dadurch wird gewährleistet, dass nur eine kleine Mörtelmenge 14a den Spalt 17 zwischen der Walze 1 und der Plattenoberfläche durchdringt und mit der Walze 1 nach hinten aus dem Zwickel 13 transportiert wird. Die nach hinten austretende Mörtelmenge haftet an der Oberfläche der Walze 1 und wird von dieser als umlaufendes Gut mitgenommen und dem Mörtelbett im Zwickel 6 wieder zugeführt. Ferner wird dadurch gewährleistet, dass der Auftrag lückenlos und rakelartig gebildet wird und die Walze 1 bereits den Mörtel, insbesondere infolge des Wulstes 16 und der Drehrichtung, mit einem geringen Überdruck durch die Maschen der Bewehrungsmatte in die Poren drückt bzw. einmassiert. Der Druck wird insbesondere wirksam, wenn der Zwickel 13 nahezu vollständig mit Mörtel gefüllt ist. Insofern kann auch mit dem Füllungsgrad im Zwickel 13 der Auftragsdruck beeinflusst werden.

Die Glättwalze 2 arbeitet, wie an sich bekannt, in Drehrichtung des Pfeiles 15, also entgegengesetzt zur Vorschubrichtung der Platten. Der Spalt 18 zwischen der Walze 2 und der Oberfläche der Platten 4 ist einstellbar und gewährleistet die gewünschte Schichtdicke des Mörtels von z.B. 2 bis 2,5 mm. Die zur Transportrichtung der vorzugsweise 2 bis 40 cm dicken Platten 4 entgegengesetzte Drehrichtung der Walze 2 ergibt in an sich bekannter Weise den gewünschten Glätteffekt auf der Mörteloberfläche 14b und bewirkt zusätzlich ein Einmassieren des Mörtels in das Gewebe der Bewehrungsmatte sowie in die Poren der Bauplatten 4. Der Mörtel, der an der Glättwalze 2 haften bleibt und von ihr im Zwickel 13 aus dem an sich bekannten, der Walze 2 nachlaufenden Mörtelwulst 25 mit nach oben transportiert wird, wird zum grössten Teil vom Gegenstrom des Mörtels, der aus dem Zwickel 6 durch den Spalt 9 nach unten fliesst, aufgenommen und wieder nach unten transportiert. Es kann bei diesem Mörtelkreislauf zur Ausbildung eines Luftlochs 24a kommen, das beim Auftragen des Mörtels nach Art eines Auffangbehälters für überschüssiges Mörtelmaterial wirkt. Wird das Luftloch zu gross, fehlt Material; wird es zu klein, muss die Zufuhr gedrosselt werden.

Der Mörtel, der von der Glättwalze 2 aus dem Mörtelbett im Wickel 13 nach oben transportiert wird, wird in an sich bekannter Weise von einem Abstreifer 7, der gegen die Oberfläche der Walze 2, wie dargestellt, wirkt, abgestreift, so dass eine saubere, glatte Oberfläche der Walze 2 zum Glätten des Mörtels auf den Platten 4 zur Verfügung steht.

Die Veränderbarkeit des Spalts 9, 17 und 18 wird erfindungsgemäss durch an sich bekannte Exzenterverstelleinrichtungen 8 und 8' gewährleistet. Die Exzentereinrichtungen bestehen zweckmässigerweise aus je einem Verstellrad 19, das über einen Treibriemen 20 mit einer an der Walze 1 bzw. 2 angeordneten Drehscheibe (nicht dargestellt, weil bekannt) in Verbindung steht. Die Achsen 21 und 22 der Walzen 1 und 2 sind in einer Exzenterführung (nicht dargestellt, weil bekannt) gelagert, so dass beim Drehen der Verstellräder 19 die Achsen 21 und 22 auf dem jeweiligen Kleinkreis 23 um die jeweilige Achse 24 versetzt werden können. Diese Versetzungsmöglichkeiten ergeben in Kombination mit den stufenlos einstellbaren Laufgeschwindigkeiten der Walzen 1 und 2 und des Transportmittels 10 die Möglichkeit, einen optimalen Frischmörtelauftrag selbst dünner Mörtelschichten lückenlos und mit Bewehrungselementen kontinuierlich und maschinell durchzuführen.

Nach dem neuen Verfahren bzw. mit der neuen Vorrichtung können Einzelplatten bewehrt und beschichtet werden. Es kann aber auch ein aus mehreren hintereinander und nebeneinander dicht an dicht liegenden Platten bestehender Plattenverbund durch Bewehrung und Beschichtung hergestellt werden. Insbesondere zur Herstellung eines Plattenverbundes gibt der Stand der Technik keine vergleichbaren Anregungen. Die bekannten Vorrichtungen sind nicht geeignet, weil der Drehsinn der Auftragswalze zum Verrutschen des Plattenmusters und des Bewehrungsmaterials führen kann. Die Änderung des Drehsinns lag aber nicht ohne weiteres nahe, weil die Mörtelzuführung dadurch beeinträchtigt wird. Die erfinderische Idee, den Mörtel in den Zwickel 6 einzufüllen und durch den Spalt 9 strömen zu lassen und im Zwickel 13 aufzutragen, lag ebenfalls nicht nahe, weil zu befürchten war, dass zuviel Mörtel nach hinten aus der Vorrichtung ausgetragen wird. Erfindungsgemäss wird dies jedoch dadurch verhindert, dass der Spalt 17 so eng wie möglich, während er beim Stand der Technik soweit wie möglich eingestellt wird. Das Auftragen im Zwickel 13 lag ausserdem nicht nahe, weil zuviel Mörtelmaterial durch den Gegenlauf der Glättwalze 2 im Bereich des Spalts 9 wieder herausgetragen wird, so dass für den Mörtelauftrag zu wenig Material im Zwickel 13 zur Verfügung steht. Erfindungsgemäss kann dieses Problem in überraschender Weise dadurch gelöst werden, dass die Auftragswalze 1 schneller läuft als die Glättwalze 2. In Kombination damit kann die Veränderung der Weite des Spalts 9 und/oder die Veränderung der Transportgeschwindigkeit der Platten 4 besonders optimale Verhältnisse für den Auftrag des Mörtels schaffen. Insofern schafft die Erfindung mit genial einfachen Veränderungen bekannter Verfahrensweisen bzw. Vorrichtungen eine Möglichkeit, z.B. bewehrte, in der DE-A Nr. 2854228 beschriebene Gasbetonplatten maschinell und kontinuierlich herzustellen.

## Patentansprüche

1. Verfahren zum kontinuierlichen Auftragen einer Beschichtungsmasse auf Bauplatten (4) mit einer Vorrichtung, die über eine rotierende Auftragswalze (1) und eine unmittelbar in Transportrichtung der Platten hinter der Auftragswalze angeordnete rotierende Glättwalze (2) verfügt, wobei die Beschichtungsmasse mit der Auftragswalze auf die Platten aufgetragen und mit der entgegengesetzt zur Transportrichtung der Platten rotierenden Glättwalze geglättet wird, dadurch gekennzeichnet, dass die Beschichtungsmasse ein mineralischer Frischmörtel (14) ist, der im Bereich des unteren Zwickels (13) zwischen den Walzen (1, 2) auf poröse, mineralische Bauplatten (4) aufgetragen wird, wobei die Auftragswalze (1) entgegengesetzt (12) zur Transportrichtung (3) der Platten rotiert.

2. Verfahren nach Anspruch 1, dadurch gekennzeichnet, dass auf den Platten (4) vor dem Beschichten eine Bewehrungsmatte (10a) unverrückbar angeordnet wird.

3. Verfahren nach Anspruch 2, dadurch gekennzeichnet, dass die Bewehrungsmatte (10a) am vorderen Ende des Plattentransportmittels (10) befestigt und von einer Rolle durch die Bewegung des Transportmittels abgezogen wird, wobei sie auf der zu beschichtenden Oberfläche der Platten abgelegt wird.

4. Verfahren nach einem oder mehreren der Ansprüche 1 bis 3, dadurch gekennzeichnet, dass als Beschichtungsmasse ein mineralischer Frischmörtel (14) mit der folgenden Zusammensetzung aufgetragen wird:

 40 bis 70 Gew.-% Sand (Körnung 0 bis 0,5 mm)
 25 bis 60 Gew.-% Bindemittel, vorzugsweise Zement
 3 bis 10 Gew.-% Kalkhydrat
 0,3 bis 0,6 Gew.-% Methylcellulose.

5. Verfahren nach einem oder mehreren der Ansprüche 1 bis 4, dadurch gekennzeichnet, dass der Frischmörtel (14) in einer Schichtdicke von 1 bis 4, vorzugsweise 2 bis 2,5 mm, mit einem Wasserfeststoffaktor von ca. 0,3 aufgetragen wird.

6. Verfahren nach einem oder mehreren der Ansprüche 1 bis 5, dadurch gekennzeichnet, dass der Frischmörtel (14) auf Gasbetonplatten einer Dicke von 2 bis 40 cm aufgetragen wird.

7. Verfahren nach einem oder mehreren der Ansprüche 1 bis 6, dadurch gekennzeichnet, dass während des Auftragens des Frischmörtels die Auftragswalze (1) schneller rotiert als die Glättwalze (2).

8. Verfahren nach einem oder mehreren der Ansprüche 1 bis 7, dadurch gekennzeichnet, dass der Frischmörtel (14) im oberen Zwickel (6) zwischen den Walzen aufgegeben wird und von der Auftragswalze durch einen Spalt (9) zwischen den Walzen (1, 2) in den unteren Zwickel (13) befördert wird.

9. Vorrichtung zur Beschichtung von Platten, insbesondere zur Durchführung des Verfahrens nach Anspruch 1 bis 8, mit einer Glättwalze (2) und einer in Transportrichtung der Bauplatten (4) unmittelbar vorgeordneten Auftragswalze (1), die separat antreibbar und höhenverstellbar angeordnet sind, wobei unter den Walzen (1, 2) ein Transportmittel (10) für die Platten angeordnet und der entgegengesetzt zur Transportrichtung der Platten (4) antreibbaren Glättwalze (2) ein Abstreifer (7) zugeordnet ist, und wobei Mittel zur Aufgabe der Beschichtungsmasse vorgesehen sind, dadurch gekennzeichnet, dass die Auftragswalze (1) entgegengesetzt (12) zur Transportrichtung (3) der Platten (4) antreibbar ist.

10. Vorrichtung nach Anspruch 9, dadurch gekennzeichnet, dass sich die Beschichtungsmassen-Zuführeinrichtung (5) über dem oberen Zwickel (6) zwischen den Walzen (1 und 2) befindet.

11. Vorrichtung nach Anspruch 9 und/oder 10, dadurch gekennzeichnet, dass die Auftragswalze (1) und/oder die Glättwalze (2) zur Veränderung des gegenseitigen Abstands seitlich verstellbar angeordnet sind, so dass die Breite des Spalts (9) zwischen den Walzen (1, 2) verändert werden kann.

12. Vorrichtung nach einem oder mehreren der Ansprüche 9 bis 11, dadurch gekennzeichnet, dass die Walzen (1 und 2) mit Exzenterverstelleinrichtungen (8 bzw. 8') höhenverstellbar und seitlich verstellbar angeordnet sind.

13. Vorrichtung nach Anspruch 12, dadurch gekennzeichnet, dass die Exzenterverstelleinrichtung (8 bzw. 8') ein Verstellrad (19) aufweist, das über einen Treibriemen (20) mit einer an der Walze (1 bzw. 2) angeordneten Drehscheibe in Verbindung steht, die Achse (21 bzw. 22) der Walze (1 bzw. 2) in einer Exzenterführung gelagert ist, so dass beim Drehen des Verstellrads (19) die Achse (21 bzw. 22) auf dem jeweiligen Kleinkreis (23) um die jeweilige Achse (24) versetzt werden kann.

## Claims

1. A method of continuously applying a coating mass onto building panels (4) with an apparatus which comprises a rotating application roller (1)

and a rotating smoothing roller (2) disposed behind the application roller directly in the conveying direction of the panels, the coating mass being applied by the application roller onto the panels and smoothed by the smoothing roller which rotates contrary to the conveying direction of the panels, characterized in that the coating mass is a green mineral mortar (14) which is applied in the region of the lower nip (13) between the rollers (1, 2) onto porous, mineral building panels (4), the application roller (1) rotating in the opposite direction (12) to the conveying direction (3) of the panels.

2. A method according to Claim 1, characterized in that a reinforcement mat (10a) is disposed non-displaceably on the panels (4) before coating.

3. A method according to Claim 2, characterized in that the reinforcement mat (10a) is secured to the front end of the panel conveying means (10) and is drawn off from a roller by the movement of the conveying means, it being laid down on the surface of the panels to be coated.

4. A method according to one or more of Claims 1 to 3, characterized in that a green mineral mortar (14) with the following composition is used as the coating mass:

40 to 70% by weight sand (grain size 0 to 0.5 mm),
25 to 60% by weight binder, preferably cement,
3 to 10% by weight calcium hydroxide,
0.3 to 0.6% by weight methyl cellulose.

5. A method according to one or more of Claims 1 to 4, characterized in that the pure mortar (14) is applied in a layer of from 1 to 4, preferably from 2 to 2.5 mm, in thickness with a water solids factor of approximately 0.3.

6. A method according to one or more of Claims 1 to 5, characterized in that the green mortar (14) is applied to aerated concrete panels of a thickness of from 2 to 40 cm.

7. A method according to one or more of Claims 1 to 6, characterized in that during the application of the green mortar the application roller (1) is rotated more quickly than the smoothing roller (2).

8. A method according to one or more of Claims 1 to 7, characterized in that the green mortar (14) is delivered in the upper nip (6) between the rollers and is passed forward from the application roller through a gap (9) between the rollers (1, 2) to the lower nip (13).

9. An apparatus for coating panels, in particular for performing the method according to Claims 1 to 8, with a smoothing roller (2) and an application roller (1) disposed immediately upstream of the building panels (4) in the conveying direction, which rollers are arranged so as to be separately drivable and vertically adjustable, a conveying means (10) for the panels being disposed below the rollers (1, 2) and a scraper (7) being associated with the smoothing roller (2) which can be driven in the opposite direction to the conveying direction of the panels (4), and means being provided for delivering the coating mass, characterized in that the application roller (1) can be driven in the opposite direction (12) to the conveying direction (3) of the panels (4).

10. An apparatus according to Claim 9, characterized in that the coating-mass feed device (5) is disposed above the upper nip (6) between the rollers (1 and 2).

11. An apparatus according to Claim 9 and/or 10, characterized in that the application roller (1) and/or the smoothing roller (2) are arranged so as to be laterally adjustable in order to vary their mutual distance, so that the width of the gap (9) between the rollers (1, 2) can be varied.

12. An apparatus according to one or more of Claims 9 to 11, characterized in that the rollers (1 and 2) are arranged so as to be vertically adjustable and laterally adjustable by eccentric adjustment devices (8 and 8' respectively).

13. An apparatus according to Claim 12, characterized in that the eccentric adjustment device (8 or 8' respectively) comprises an adjustment wheel (19) which is connected by way of a transmission belt (20) to a rotating pulley disposed on the roller (1 and 2 respectively), and the axis (21 and 22 respectively) of the roller (1 and 2 respectively) is mounted in an eccentric guide so that, as the adjustment wheel (19) rotates, the axis (21 and 22 respectively) can be displaced on the respective small circle (23) about the respective axis (24).

## Revendications

1. Procédé pour l'application continue d'un matériau sur des panneaux de construction (4) au moyen d'un dispositif comportant un applicateur cylindrique (1) rotatif et un cylindre égalisateur (2) disposé directement derrière l'applicateur cylindrique dans la direction du transport des panneaux, le matériau à appliquer étant appliqué sur les panneaux par l'applicateur cylindrique et étant égalisé par le cylindre égalisateur tournant dans le sens opposé à la direction de transport des panneaux, caractérisé en ce que le matériau à appliquer est un mortier frais (14) minéral qui est appliqué sur les panneaux de construction (4) poreux, minéraux, au niveau du dièdre inférieur (13) situé entre les cylindres (1, 2), l'applicateur cylindrique (1) tournant en sens inverse de la direction de transport (3).

2. Procédé selon la revendication 1, caractérisé en ce qu'une natte d'armature (10a) est disposée sans liberté de mouvement sur les panneaux (4) avant l'enduction.

3. Procédé selon la revendication 2, caractérisé en ce que la natte d'armature (10a) est assujettie à l'extrémité antérieure du moyen de transport (10) des panneaux et est tendue par un rouleau grâce au mouvement du moyen de transport, ce qui l'applique sur la surface des panneaux à enduire.

4. Procédé selon une ou plusieurs revendications 1 à 3, caractérisé en ce que le matériau à enduire est un mortier frais (14) minéral, ayant la composition suivante:

40 à 70% en poids de sable (calibre 0 à 0,5 mm)

25 à 60% en poids d'agent de liaison, avantageusement de ciment

3 à 10% en poids d'hydrate de calcium

0,3 à 0,6% en poids de méthylcellulose.

5. Procédé selon une ou plusieurs des revendications 1 à 4, caractérisé en ce que le mortier frais (14) est appliqué en une couche d'une épaisseur de 1 à 4 mm, avantageusement 2 à 2,5 mm, dans une proportion matériau solide/eau d'environ 0,3.

6. Procédé selon une ou plusieurs des revendications 1 à 5, caractérisé en ce que le mortier frais (14) est appliqué en une couche d'une épaisseur de 2 à 40 cm sur des panneaux de béton-gaz.

7. Procédé selon une ou plusieurs des revendications 1 à 6, caractérisé en ce que, pendant l'application du mortier frais, l'applicateur cylindrique (1) tourne plus vite que le cylindre égalisateur (2).

8. Procédé selon une ou plusieurs des revendications 1 à 7, caractérisé en ce que le mortier frais (14) est chargé dans le dièdre supérieur (6) situé entre les cylindres et est acheminé par l'applicateur cylindrique, à travers l'étranglement (9) situé entre les cylindres (1, 2), dans le dièdre inférieur (13).

9. Dispositif pour l'enduction de panneaux, en particulier pour la mise en œuvre du procédé selon les revendications 1 à 8, comportant un cylindre égalisateur (2) et un applicateur cylindrique (1) disposé juste devant ce dernier par rapport à la direction de transport des panneaux de construction (4), lesquels peuvent être commandés séparément et sont déplaçables en hauteur, un moyen de transport (10) pour les panneaux étant disposé sous les cylindres (1, 2) et un racloir 7 étant adjoint au cylindre égalisateur, lequel peut être entraîné en sens inverse de la direction de transport des panneaux (4), des moyens d'alimentation en matériau à appliquer étant prévus, caractérisé en ce que l'applicateur cylindrique (1) peut être entraîné en sens inverse de la direction de transport (3) des panneaux.

10. Dispositif selon la revendication 9, caractérisé en ce que l'installation d'alimentation en matériau à appliquer (5) se trouve au-dessus du dièdre supérieur (6) situé entre les cylindres (1 et 2).

11. Dispositif selon la revendication 9 et/ou 10, caractérisé en ce que l'applicateur cylindrique (1) et/ou le cylindre égalisateur (2) sont disposés latéralement en vue de la modification de l'espace les séparant de façon que la largeur de l'étranglement (9) entre les cylindres (1, 2) puisse être modifiée.

12. Dispositif selon une ou plusieurs des revendications 9 à 11, caractérisé en ce que les cylindres (1 et 2) sont déplaçables en hauteur et latéralement au moyen d'organes de déplacement excentrés (8, respectivement 8').

13. Dispositif selon la revendication 12, caractérisé en ce que l'organe de déplacement excentré (8, respectivement 8') comporte une roue de déplacement (19) qui est liée à un disque d'entraînement assujetti au cylindre (1, respectivement 2) par l'intermédiaire d'une courroie d'entraînement (20) et en ce que l'axe (21, respectivement 22) du cylindre (1, respectivement 2) est logé dans un guide excentré de façon que, par la rotation de la roue de déplacement (19), l'axe (21, respectivement 22) puisse être déplacé sur chacun des petits cercles (23) autour de chacun des axes (24).